# EUROPEAN PATENT SPECIFICATION

(11) **EP 3 098 047 B1**
(45) Date of publication and mention of the grant of the patent: **23.07.2025**
(21) Application number: 16171682.4
(22) Date of filing: 27.05.2016
(51) Int. Cl.: B29C 41/00, B29C 41/06, B29D 22/04

(54) **METHOD FOR MANUFACTURING A THREE-DIMENSIONAL COMPOSITE OBJECT**
VERFAHREN ZUR HERSTELLUNG EINES DREIDIMENSIONALEN VERBUNDGEGENSTANDS
PROCÉDÉ DE FABRICATION D'UN OBJET COMPOSITE TRIDIMENSIONNEL

(30) Priority: 28.05.2015 DE 102015209800
(43) Date of publication of application: 30.11.2016
(73) Proprietor: Adidas AG, 91074 Herzogenaurach (DE)
(72) Inventor: Nürnberg, Hans-Peter, 91074 Herzogenaurach (DE); Drummer, Dietmar, 91058 Erlangen (DE)
(74) Representative: Bardehle Pagenberg Partnerschaft mbB Patentanwälte Rechtsanwälte

(56) References cited:
- GB-A- 1 247 115
- GB-A- 1 335 500
- GB-A- 1 533 897
- US-A- 4 104 357

## Description

### I. Technical field

The present invention concerns a method for manufacturing a three-dimensional composite object.

### II. Prior art

The manufacturing of three-dimensional articles by rotation molding is known as such. Rotation molding is an established method of plastics technology, with which primarily large, hollow parts with complex geometries are manufactured. Typical applications are, for example, tanks or housings for appliances and installations. In this method, a hollow mold filled with plastic powder is generally rotated about two axes and heated. Usually, thermoplastic foundation powder starts to melt subsequently in the mold and sticks upon contact to the die wall, which is heated beyond the melt temperature of the thermoplastic material being processed. A melt film forms on the wall of the die. The rotation is adjusted so that each region of the wall of the die comes into contact with nonmelted powder, which collects primarily in the respective lower region of the cavity, in order to achieve a uniform wall thickness. The melt solidifies by cooling of the still rotating die. The piece cooled down to the demolding temperature is then removed from the die.

For example, US 4,093,219 pertains to sports balls. In order to make the bladder, a polyester elastomer is centrifugally molded by rotating of a hollow casting mold with a given quantity of this elastomer in fine powder form. The casting mold is rotated at the same time about two mutually perpendicular axes, while the compression mold is moved through zones with heating units (250° C) and cooling units. The casting mold is then moved without rotation to a demolding station.

US 8,210,973 proposes rotation molding as an alternative to the making of a bladder for a sports ball by means of blow molding.

US 2009/0266823 concerns a method for the manufacture of a sealing bladder of duroplastic polymer for a tank containing pressurized liquid. The method involves the steps of (a) providing a polymerization mixture, containing the precursor components of the duroplastic polymer and optionally at least one polymerization catalyst, (b) the polymerizing of the mixture to obtain the duroplastic polymer in a rotating casting mold in order to form the bladder, and (c) removing the resulting duroplastic polymer bladder from the casting mold.

US 5,433,438 pertains to a ball for playing, therapy, and sports training. The ball is made by distributing a foam polyurethane mixture in a casting mold and rotating the casting mold for a predetermined number of revolutions. The casting mold is rotated in order to cover the inner surface of the casting mold completely with foam material.

DE 27 23 625 pertains to a ball of thermoplastic material as well as a method for its manufacture. Centrifugal casting technology is used for the manufacture of the ball. In the method, a spherical mold of two complementary parts executes a planetary motion, during which the thermoplastic material of the different layers of the ball are melted from the outer layer to the inner layer. The manufacturing method is characterized in that the feeding of the material for the inner layer occurs after the opening of the mold at a temperature at which the melting of the material forming the preceding layer or layers is not yet completed, so that this layer or these layers can be severed in the area of the connection of the two complementary parts of the mold.

US 4,258,917 concerns a rotation casting method for the manufacture of rubber-reinforced objects. The method involves the forming of two premolded and preshrunk half shells of nonwoven fabric, which are then inserted in the upper and lower halves of a rotational mold, so as to line their inner surfaces. The nonwoven fabrics are cut out so that they cover the flange region between the two halves of the casting mold or so that one half shell overlaps the other one. A round strip of film made from a terminal amine liquid polymer is then inserted between the layers of nonwoven fabric in the flange region or between the overlapping segments of the nonwoven fabric and a carboxyl containing polymer mixture is added to the lower half of the casting mold. The casting mold is tightly closed and the materials are rotation-molded at a temperature which is sufficient to seal and impregnate the half shells of nonwoven fabric and encapsulate them with carboxyl containing liquid polymer mixture in order to produce a dimensionally stable bladder or a ball.

EP 0 365 488 pertains to a method of making hollow elastic bodies, especially balls and similar objects, as well as the balls made in this way. A ball is produced in the centrifugal molding method, after which plastics for form the ball shapes are cast layer by layer in a mold consisting of two separable complementary halves, to which a planetary motion is imparted, namely, starting from the outer layer and working toward the innermost layer, wherein the material for the forming of one of the inner layers is introduced after opening the mold at such a temperature that the material forming the preceding layer(s) has not entirely melted, so that the breaking of the layer or layers is possible in the area of the connection between the two mold parts.

Further prior art is disclosed in DE 2 049 907 A, DE 2 403 982 A1,
US 2003 / 0 227 103 A1, GB 1 254 090 A, and DE 68 911 647 T2.

GB 1247 115 A relates to a method of making a hollow inflatable article such as a playball comprising forming in a mould a hollow body from plastisol having a quantity of discrete fibres therein so that the fibres are evenly distributed in the wall of the hollow body, removing the hollow body from the mould and inflating it in a hot plastic condition to distend it with a consequential reduction in wall thickness.

US 4 104 357 A relates to low speed rotational molding of thermoset plastics to produce an article having relatively thin walls.

GB 1335 500 A relates to a method for manufacturing a strengthened hollow synthetic resin article comprising mixing with a synthetic resin material strands of fibres previously bonded together, adding the mixture to a two-axial rotative mold, and rotating the mold about its two axes to mold the hollow article.

GB 1 533 897 A relates to moulded fibre reinforced plastic articles and to methods for their manufacture.

It has proven to be a drawback of the known rotation molding methods that satisfactory results cannot be achieved with them in the production of three-dimensional composite articles. This is due to the fact that so far no adequate homogeneity can be achieved for the components forming the composite material in the rotation mold. The presumed reason for this is the differing size, shape and density of the components, so that their mixture separates in the casting mold. Furthermore, certain components have a tendency to form agglomerates in the casting mold.

Therefore, the problem which the present invention proposes to solve is to indicate a method for the manufacture of a three-dimensional composite object which overcomes, or at least mitigates the drawbacks of the prior art. In particular, the method according to the invention should enable a homogeneous blending and/or a specific and defined distribution of the various materials in a rotational mold. Moreover, the method according to the invention should enable a specific introducing of given functions or functionalities in the composite object being manufactured.

This problem is solved by a method according to claim 1. The dependent claims contain advantageous modifications.

### III. Summary of the invention

The invention is defined by the independent claim. In the following, the parts of the description and drawings referring to aspects which are not covered by the claims are not presented as aspects of the invention but as background art or examples useful for understanding the invention.

The method according to the invention for the manufacturing of a three-dimensional composite object, especially a sports article, has the steps of: (a.) providing a rotatable casting mold; (b.) filling of a first material into the casting mold; (c.) filling of a second material into the casting mold, wherein at least one of the materials is a polymer material; (d.) placing at least one element in the casting mold, wherein the element is a multilayered panel, an electronic component, a film, a textile, or a stiffening element; (e.) moving of the casting mold; (f.) heating and/or cooling of at least one of the filled materials; and (g.) adapting of at least one process parameter during the performance of one or more of the preceding steps, so that a homogeneous distribution of the second material in the manufactured composite object is achieved, wherein the at least one process parameter is the rotation speed of the casting mold, the speed with which the casting mold is moved, the deflection of the casting mold in the case of a swivel movement, the heating time of at least one of the materials, the cooling time of at least one of the materials, the viscosity of at least one of the materials, the angle of the rotation axes of the casting mold, the ratio of the rotation speeds about the rotation axes of the casting mold, the holding times of the first and/or second material in the casting mold, the filling times of the first and/or second material, or combinations thereof.

According to the invention, two materials are filled into the rotational mold, at least one of the materials being a polymer material.

The polymer material used according to the invention can be a thermoplastic material and/or cross-linking material.

If the filled-in polymer material is a thermoplastic material, the heating of the filled-in material causes the material to start to melt and thus forms the substrate or matrix material. The second material can be fibers, for example, which are embedded in the first substrate material after the rotation molding, or adhere in a sheet to its surface.

When using duroplastic materials, binders can be added in addition in order to assist a mixing of the materials used. Alternatively, it is also possible for the duroplastic materials used to combine with each other solely on the basis of their inherent properties. Alternatively, catalysts can also be used.

A blending of the two materials can also be done alternatively outside the casting mold. Moreover, the first and the second material can also be filled at the same time into the casting mold, for example, at the start of the method according to the invention.

It should be noted that there are basically three possible filling sequences, namely:
a) filling of the materials at the same time,
b) first filling of the first material, then filling of the second material; or
c) first filling of the second material, then filling of the first material.

In variants b) and c), a temperature change can be brought about before filling in the second material.

By movement of the casting mold is meant in the context of the present invention for example a rotating of the casting mold, a swiveling of the casting mold (about an axis, for example), a back and forth movement, and up and down movement, etc.

In order to achieve a homogeneous distribution of the second material in the manufactured composite object, at least one process parameter is adapted during the performance of one or more of the preceding steps. A homogeneous distribution of the embedded material is important for the resulting composite material to have the desired stability.

In the context of the present invention, a distribution of the second material is considered to be homogeneous when the second material is well blended with the first material. In particular, a homogeneous distribution exists when, upon macroscopic viewing of the piece in a representative surface element, the second material is uniformly distributed in the surface. The surface of the second material in this case is predominantly cross-linked with the first material. A size of the representative surface element depends on the size of the three-dimensional composite object being manufactured by means of rotation molding. In particular, a homogeneous distribution exists if the second material forms so-called agglomerates. However, a distribution is considered to be homogeneous when it is subject to density fluctuations or has a density gradient, as long as the second material is present in the first material throughout. The first material can even form microscopic islands in which no second material is to be found.

In the example of fibers, if these are not mixed with the first polymer substrate, or sufficiently mixed with it, and positively bound to it, the fibers would have practically no effect on the strength of the composite material. As is known, fiber composites acquire advantageous properties through mutual interactions of their two components, which is only assured upon adequate blending.

The inventors have realized that a homogeneous and/or specific and defined blending of the first polymer material (the embedded "matrix") with the second material can be achieved in that at least one process parameter is adapted during the performance of one or more of the preceding steps of the method. In what follows, examples shall be given for process parameters whose adaptation leads to a homogeneous distribution of the second material in the manufactured composite object.

These process parameters are, depending on the material used, the rotation speed of the casting mold, the speed with which the casting mold is moved, the deflection of the casting mold in the case of a swivel movement, the heating time of at least one of the materials, the cooling time of at least one of the materials, the viscosity of the first material and the angle of the rotation axes of the casting mold, the ratio of the rotation speeds about the rotation axes of the casting mold, the holding times of the first and/or second material in the casting mold, the filling times of the first and/or second material and combinations of these process parameters.

One process parameter found to be relevant by the inventers is the rotation speed of the casting mold. If the rotation speed in the method according to the invention is chosen according to at least one of the materials, this leads to a homogeneous distribution of the material. For example, when using two materials according to the claims, the rotation speed can be less or greater than the rotation speed when using only a single material. The latter rotation speed is defined in that it makes possible a uniform distribution of the first material in the casting mold.

Another process parameter found to be relevant by the inventers is the speed with which the casting mold is moved. If this speed in the method according to the invention is chosen according to at least one of the materials selected, this leads to a homogeneous and/or specific and defined distribution of the material.

Yet another process parameter found to be relevant by the inventers is the deflection of the casting mold in the case of a swivel movement. By deflection is meant the maximum attained angle by which the casting mold is swiveled during the swivel movement relative to its position of rest. If this angle is chosen according to at least one of the materials selected, this can assure a homogeneous and/or specific and defined distribution of the material.

Another process parameter found to be relevant by the inventers is the heating time of the materials, for example, by heating of the casting mold, especially when using thermoplastic materials. A homogeneous distribution of the second material in the resulting composite object is achieved when the heating time is less than the heating times typically used in rotational casting. Thus, if two materials are used according to the claims, of which at least one is a thermoplastic substrate material, in order to achieve a homogeneous distribution of the second material the heating time must be shorter than when only the first material is used.

Yet another process parameter found to be relevant by the inventers is the time to solidification of at least one of the materials, for example, by cooling of the casting mold. A homogeneous distribution of the second material in the resulting composite object is achieved if the time to solidification of the first material is less than the times to solidification typically used in rotational casting. Thus, if two materials are used according to the claims, of which at least one is a polymer substrate material, in order to achieve a homogeneous distribution of the second material the time to solidification must be shorter than when only the first material is used.

Another process parameter found to be relevant by the inventers is the angle of the rotation axes of the casting mold. If the casting mold has two rotation axes, these must be essentially perpendicular to each other in order to achieve a homogeneous distribution of the second material. "Essentially perpendicular" means here an angle of 90° in the context of typical manufacturing fluctuations. By rotation axis is meant in the context of the present invention both rotation axes, and also swivel axes. Thus, for example, it is possible for the casting mold to have a single axis in the form of a swivel axis.

Another process parameter found to be relevant by the inventers is the filling time of the second material. The inventors have found that the most homogeneous possible distribution of the second material is achieved if the second material is filled into the casting mold before the complete softening of the first material on the side facing away from the die.

When in the context of the method according to the invention the second material has fibers, the inventors consider the length of the fibers to be another relevant process parameter. The fiber length is advantageously significantly more than the critical fiber length, which can be calculated as a function of fiber strength, fiber diameter, and fiber/plastic adhesion strength. The critical fiber length indicates at which fiber length the composite object begins to be strengthened by means of the fibers. Larger fiber lengths increase the tensile strength of the composite object and also in particular the toughness under impact stress.

Summarizing, the inventors have found that the adaptation of certain process parameters is critical to achieving a homogeneous distribution of the second material in the composite object. Examples of such process parameters and how they are to be adapted have been indicated and will be explained in more detail in the course of the description of preferred sample embodiments.

Here, it must be emphasized that several of the mentioned process parameters can also be adapted at the same time in order to accomplish a homogeneous distribution of the second material. For example, the rotation speed and the heating time can be adapted at the same time, as described herein. Likewise, the heating time and the cooling time or the rotation speed and the fiber length can be adapted at the same time. Any given combinations of the process parameters mentioned herein as being important to a homogeneous distribution of the second material are possible.

The fibers, for example, can be aramide fibers. Aramide fibers have a very low coefficient of thermal expansion. In combination with a generally higher coefficient of thermal expansion of the first polymer material, a highly dimensional-stable composite object can be obtained. Other organic fibers, such as organic fibers (polymer fibers, natural fibers etc.) or inorganic fibers can also be used. Moreover, it is also possible to use fibers which are made from the same material as the matrix (same-material fibers). In this case, the fibers advantageously have a greater strength than the matrix.

The fibers as the second material can be coated with a polymer material, such as the first material. This achieves a better blending of the first and second materials, since the surface structure of the coated fibers is bonding-compatible, e.g., to the surface structure of the first material.

The first and/or second material can be a reactive material. For example, it can be a reactive plastic. The first material and/or the second material can also be polyamide or polyethylene.

The first material can be a thermoplastic polyurethane, or TPU. TPU is relatively easy to work with. Furthermore, TPU is an elastomer, which is shape-stable, deforming under tensile and compressive stress, but returning largely to its original shape in the stress-free state. Thus, TPU is very well suited to making three-dimensional articles subjected to pressure, such as bladders for balls. TPU is likewise suitable for three-dimensional articles which are regularly exposed to impacts, such as shin guards for soccer players.

The first material can be provided in liquid and/or granular form. This enables a dosed filling of the material in the casting mold, e.g., making use of a flow rate meter. Thus, the filling of the first material can also be done by automation.

The rotatable casting mold can turn about at least two axes. In this way, articles with a spherical shape can be produced in particular, since a rotation about the two rotation axes ensures a uniform distribution of the first and second materials in the casting mold.

The first axis can be a rotation axis and the second axis a swivel axis.

The rotatable casting mold can be rotatable about three axes. This makes it possible to produce more complex geometries, possibly having undercuts.

The method steps according to the invention can be carried out at least twice, without removing the cooled material from the casting mold in between, so as to obtain a multilayered composite object. In this way, one can obtain a multilayered three-dimensional article. The blended first and second material is deposited layer by layer on the previous layer. Since the individual layers are thinner than the overall wall thickness of the composite object, a separation of the first and second material from the blended state is prevented or at least lessened, since the two materials in thicker layers have a greater tendency to separate than those in thinner layers.

The method as described above further comprises the step of placing at least one element in the casting mold. The element may be a semi-finished product like e.g. a multilayered panel, electronic component, a film, a textile (woven fabric, warp-knitted fabric, weft-knitted fabric, non-crimp fabric, non-woven fabric, etc.), or stiffening element. Such an element could be a pre-formed (three-dimensional) or planar (two-dimensional) element. The element may be placed in the mold before method step (b.), before method step (c.) or after method step (c.).

Another aspect which is not part of the claims concerns a three-dimensional composite object, especially a sports article, which has been produced by the described method.

The three-dimensional composite object can be a hollow body. In particular, it can be a bladder for a ball. The ball can be a soccer ball. More particularly, the three-dimensional composite object may be a ball, such as a soccer ball.

Alternatively, the three-dimensional composite object can be a shin guard or a shoe.

Yet another aspect which is also not part of the claims concerns a rotatable casting mold, which is suitable to carrying out the described method.

The casting mold can advantageously have at least one sensor, which detects at least one process parameter during the performance of the method according to the invention. The process parameter can be the temperature, the rotation speed of the casting mold, the speed with which the casting mold is moved, the deflection of the casting mold in the case of a swivel movement, an acceleration acting on the casting mold and/or on the material filled into the casting mold, the thickness of at least one material layer, or the distribution of the first and/or second material. The data detected by the sensor can be evaluated during the performance of the method in order to adapt at least one process parameter. The sensor can be a temperature sensor, a revolution counter, an acceleration sensor, an optical sensor or an acoustical sensor. By the use of sensors, a targeted process control becomes possible, so that certain functions or functionalities can be specifically introduced into the composite object being manufactured.

### IV. Brief description of the drawings

In what follows, aspects of the present invention shall be explained more closely, making reference to the accompanying figures. These figures show:
- Fig. 1A to 1D:: a schematic illustration of the method according to the invention;
- Fig. 2:: optional further processing steps in the context of the method according to the invention; and
- Fig. 3:: a schematic illustration of the method according to the invention for the creation of a multilayered composite object;
- Fig. 4A:: a schematic illustration of the method according to the invention;
- Fig. 4B:: curves of number of revolutions and temperature during the performance of the method according to the invention;
- Fig. 5:: a comparison between a conventional rotation molding method and an embodiment of a method according to the invention; and
- Fig. 6A and 6B:: results of measurements which were performed on a specimen reinforced with sheathed fibers.

### V. Detailed description of preferred sample embodiments

In what follows, sample embodiments and modifications of the present invention shall be described more closely.

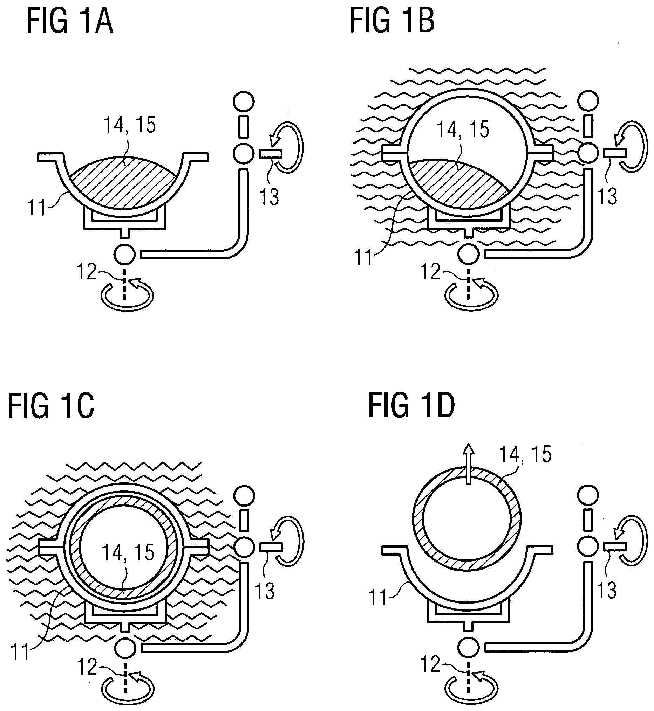

A sample embodiment of a method according to the invention for the manufacture of a three-dimensional composite object, especially a sports article, shall be described below with reference to Figures 1A to 1D.

The method has as its first step (a.) the providing of a rotatable casting mold 11. In Figures 1A to 1D, a round casting mold 11 is shown, which is suitable for the manufacture of a bladder for a soccer ball, for example. Basically, however, the casting mold can also have other geometrical shapes, such as a cylindrical shape or a complex three-dimensional geometry.

In the sample embodiment of Figures 1A to 1D, the casting mold 11 has two rotation axes, a vertical rotation axis 12 and a horizontal rotation axis 13. Basically, however, the casting mold 11 can also have a different number of rotation axes. For example, if it is a cylindrical casting mold, it will generally have only one rotation axis. If it is a casting mold with a complex three-dimensional geometry, the casting mold can have more than two axes, such as three axes. The rotation axes can have Cardan bearings, i.e., in the case of two axes, they are mounted by two bearings with mutually perpendicular intersecting rotation axes.

The method further comprises the step (b.) of filling a first material 14 into the casting mold 11. Fig. 1A shows the state after the first 14 and the second material 15 have been filled into the casting mold 11. In the sample embodiment of the method according to the invention in Figures 1A to 1D, the first material 14 and a second material 15 have already been blended together before the materials were filled into the casting mold 11. Moreover, it is possible to fill the first 14 and the second material 15 at the same time into the casting mold 11, especially at the start of the method. The first material 14 is a polymer material such as thermoplastic urethane (TPU). Basically, an ester-based TPU or an ether-based TPU can be used. The first material 14 can be filled in granular and/or liquid form into the casting mold 11 or mixed with the second material 15.

Since in this case a flow rate meter can be used, the filling can also occur fully automated. Another example of the first material 14 is Elastollan ^{®} SP 9305, which is produced for example by BASF SE. This is a powderlike material in the unprocessed state with a low viscosity melt.

The method further comprises the step (c.) of filling the second material 15 into the casting mold 11, as already explained Fig. 1A shows the state after the first 14 and the second material 15 have been filled into the casting mold 11. The second material 15 can be, for example, fibers, such as aramide fibers. In this way, a three-dimensional fiber composite article can be obtained, having excellent strength and stability.

One example of the second material 15 is a hybrid yarn with 2500 dtex such as the core yarn Twaron ^{®} 1111. This has a core of aramide yarn with 420 dtex, which has been twisted with 100 rpm. The sheath material is TPU Elastollan ^{®} SP 9305. The fiber fraction of the hybrid yarn is around 13.2 vol.-%.

The first material 14 and/or second material 15 can also be polyamide or polyethylene.

In order to facilitate the easy blending of the first 14 and second material 15 in the casting mold 11, the fibers can be coated with the first material 14, such as TPU. Thanks to the similar surface structure of the first 14 and second material 15, a separation of the mixture of the two materials in the casting mold 11 is prevented, or at least diminished.

The second material 15 can likewise be a polymer material, such as a reactive material. Thus, according to the invention, it is possible for example for the first and second material to each be 2K PU material or 2K resin. It is also possible for the first material to be a 2K PU material and the second material a 2K resin, or vice versa. It is also possible for the first material to be PU, while the second material is TPU, or vice versa. Likewise, the first material 14 and/or second material 15 can be polyamide.

The first material, as well as the second material, can also be a mixture. For example, the first material can be a mixture of two components and/or the second material can be a mixture of two components. For example, the first material can have a foundation material (also known as a matrix). The foundation material can be mixed with at least one further component. The further component can be, for example, prefabricated components and/or intermediate products. For example, electronic elements or light-emitting elements can be mixed with the foundation material. Examples of such elements are light-emitting elements (LEDs, OLEDs etc.), sensors, chips or weights. Moreover, it is possible for such elements to fulfill purely decorative purposes.

The second material 15 can also be filled in granular and/or liquid form into the casting mold 11. Since in this case a flow rate meter can be used, the filling can also be done fully automatically.

The method further comprises the step (e.) of rotating of the casting mold 11, as shown in Fig-ures 1A and 1B. The casting mold in this case is turned about the rotation axes 12 and 13, for example, by means of motors. In this process, the first 14 and the second material 15 are mixed and distributed in the casting mold 11.

The sample method per Fig. 1 further comprises the step of the heating of the materials 14, 15, for example, by heating of the casting mold 11, as shown in Fig. 1B. The casting mold 11 is still turned continuously about its rotation axes 12 and 13. When the casting mold 11 reaches the melting temperature of the first polymer material 14, this starts to melt and the second material 15 becomes embedded in the melt. Due to the rotation of the casting mold 11, the melt becomes deposited on the inner wall of the casting mold 11. The method step per Fig. 1B is preferably employed when using a thermoplastic polymer. When using duroplastics, the heating step can be omitted.

Fig. 1B shows that the materials 14, 15 are heated by means of the casting mold 11 from the outside. For example, the casting mold 11 can be placed in an oven for this purpose. Alternatively, the casting mold 11 can also be heated from the inside and have boreholes, for example, for this purpose, through which a hot liquid is pumped. Also conceivable are heating elements arranged on or in the casting mold 11, which are electrically operated. For example, it is also possible to insert a heating lance or several heating lances through one or more boreholes of the casting mold 11.

The sample method of Fig. 1 further includes the step of cooling of the material, for example, by cooling of the casting mold 11, as shown in Fig. 1C. The casting mold 11 in this process still turns continuously about its rotation axes 12 and 13. When the casting mold 11 drops below the melting temperature of the first polymer material 14, it solidifies and the second material 15 is embedded therein. Thanks to the rotation of the casting mold 11, the solidified first material 14 with the second material 15 embedded in it is deposited on the inner wall of the casting mold 11, as shown in Fig. 1C. The method step per Fig. 1C is preferably employed when using a thermoplastic polymer. When using duroplastics, the cooling step can be omitted.

Fig. 1C shows that the casting mold 11 is cooled from the outside. For example, the casting mold 11 can be placed in a cooling chamber for this purpose. Alternatively, the casting mold 11 can also be cooled from the inside and have boreholes, for example, for this purpose, through which a cold liquid is pumped. Also conceivable are cooling elements arranged on or in the casting mold 11, which are electrically operated (such as Peltier elements). For example, it is also possible to insert a cooling lance or several cooling lances through one or more boreholes of the casting mold 11.

Both the mentioned heating and cooling lances can be designed so that they can be shifted along their lengthwise axes relative to the mold. Thus, for example, different regions inside the mold can be cooled or heated differently. This is especially important for the manufacturing of multilayered composite articles, since different layers can be successively cooled or heated in this case.

It is possible that the above explained method steps b. to f. are carried out at least twice in the context of the method according to the invention, without removing the cooled-down materials 14 and 15 from the casting mold 11, in order to obtain a multilayered composite object. The first 14 and second material 15, blended by the rotation of the casting mold 11, are deposited in layers on the previous composite layers. Since the individual layers are thinner than the overall thickness of the material, a separation of the mixture of the first 14 and second material 15 is prevented. In particular, the second material 15 is prevented from depositing on the first material 14.

The method further comprises the step (g.) of the adapting of at least one process parameter during the performance of one or more of the preceding steps, so that a homogeneous distribution of the second material 15 in the resulting composite object is achieved. In order to achieve a homogeneous distribution of the second material 15 in the resulting composite object, at least one process parameter is adapted during the performance of one or more of the preceding steps (a. through g.). A homogeneous distribution of the embedded material 15 is important for the resulting composite material to have the desired stability.

A homogeneous blending of the first polymer material 14 (the embedding "matrix") with the second material 15 can be achieved, according to the invention, in that at least one process parameter is adapted during the performance of one or more of the preceding steps of the method. In the following, examples shall be given of process parameters which can be adapted to achieve a homogeneous distribution of the second material 15 in the resulting composite object.

These process parameters are, depending on the material used, the rotation speed of the casting mold, the speed with which the casting mold is moved, the deflection of the casting mold in the case of a swivel movement, the heating time of at least one of the materials, the cooling time of at least one of the materials, the viscosity of the first material and the angle of the rotation axes of the casting mold, the ratio of the rotation speeds about the rotation axes of the casting mold, the holding times of the first and/or second material in the casting mold, the filling times of the first and/or second material and combinations of these parameters.

One process parameter found to be relevant by the inventers is the rotation speed of the casting mold 11. If the rotation speed in the method according to the invention is chosen according to at least one of the materials 14, 15, this leads to a homogeneous distribution of the materials 14, 15. For example, when using two materials 14, 15 according to the claims, the rotation speed can be less or greater than the rotation speed when using only a single material. Another relevant process parameter when using a thermoplastic first material and/or a thermoplastic second material is the heating time of the casting mold 11. A homogeneous distribution of the second material 15 in the resulting composite object is achieved when the heating time is less than the heating times typically used in rotational casting. Thus, if two materials 14 and 15 are used according to the claims, of which at least one is a thermoplastic polymer substrate material, in order to achieve a homogeneous distribution of the second material 15 the heating time must be shorter than when only the first material 14 is used.

Yet another relevant process parameter when using a thermoplastic first material and/or a thermoplastic second material is the cooling time of the casting mold 11. A homogeneous distribution of the second material 15 in the resulting composite object is achieved when the cooling time is less than the cooling times typically used in rotational casting. Thus, if two materials 14 and 15 are used according to the claims, of which at least one is a thermoplastic polymer substrate material, in order to achieve a homogeneous distribution of the second material 15 the heating time must be shorter than when only the first material 14 is used.

Another relevant process parameter is the angle of the rotation axes 12 and 13 of the casting mold 11. If the casting mold 11 has two rotation axes, these must be essentially perpendicular to each other in order to achieve a homogeneous distribution of the second material 15. "Essentially perpendicular" means here an angle of 90° in the context of typical manufacturing fluctuations.

Another relevant process parameter is the filling time of the second material. The most homogeneous possible distribution of the second material 15 in the composite object can be achieved if the second material is filled into the casting mold before the softening of the first material. If the first material 14 is a thermoplastic material, the second material 15 can be filled into the casting mold 11, for example, not later than 200 seconds after the first material 14.

When in the context of the method according to the invention the second material 15 has fibers, the length of the fibers is another relevant process parameter. The fiber length is advantageously significantly more than the critical fiber length, which can be calculated as a function of fiber strength, fiber diameter, and fiber/plastic adhesion strength. The critical fiber length indicates at which fiber length the composite object begins to be strengthened by means of the fibers. The fiber length can be between 30 and 120 mm, depending on the composite object being manufactured. Larger fiber lengths increase the tensile strength of the composite object.

Finally, Fig. 1D shows that the finished three-dimensional composite object, comprising the first 14 and second material 15, is removed from the casting mold 11.

The method according to the invention can optionally include a series of preprocessing steps. For example, the inside of the casting mold 11 can be coated temporarily or permanently (e.g., by spraying or vapor deposition), in order to prevent or at least diminish an adherence of the molded three-dimensional composite object. For example, the three-dimensional composite object can be imprinted or coated. A mechanical postprocessing is likewise conceivable. For example, if it involves a bladder for a ball, a valve can be arranged on it.

In the context of the present invention, one or more elements are placed in the casting mold 11 which become part of the three-dimensional composite object. Such elements could for example be semi-finished products like e.g. multilayered panels, electronic components, films, textiles (woven fabrics, warp-knitted fabrics, weft-knitted fabrics, non-crimp fabrics, non-woven fabrics, etc.), or stiffening elements. Such elements could be pre-formed (three-dimensional) or planar (two-dimensional) elements.

It is possible to fill in such elements before filling the first material 14 into the casting mold 11. To this end, the inner surface of the casting mold 11 may comprise corresponding holding means to fix the elements with respect to the casting mold 11. Such holding means may use a vacuum to hold the elements in place. For example, the inner surface of the casting mold 11 may comprise bores connected to a vacuum source. An element placed over one or more bores will experience a pressure against the inner surface of the casting mold 11. Another example are mechanical fasteners like clips which fix the elements. Yet another example are holding means based on electrostatic or magnetic forces like metal plates or coils, respectively. A further example are adhesives like hot-melts which hold the elements in place.

Generally, the elements (for example semi-finished products) may be placed in the casting mold 11 before filling the first material 14 in the casting mold 11. Subsequently, the first material 14 and the second material 15 may be filled into the casting mold 11 and the casting mold 11 is moved, wherein at least one process parameter is adapted as described herein, so that a homogeneous distribution of the second material 15 in the manufactured composite object is achieved. Thus, the mixture of the first material 14 and the second material 15 may cover the elements as one or more layers. Thus, the elements become part of the composite object, in particular of its outer surface.

However, it is also possible to place the elements (for example semi-finished products) in the casting mold 11 after a first layer of the three-dimensional composite object has been formed by rotational molding as described herein. In this case, one or more elements are placed on the first layer and held in place as described above. Subsequently, a second layer is formed by rotational molding as described herein. Thus, the elements are integrated in the three-dimensional composite object between the first layer and the second layer.

Finally, it is also possible to place one or more elements (for example semi-finished products) on the inner surface of the innermost layer of the composite object.

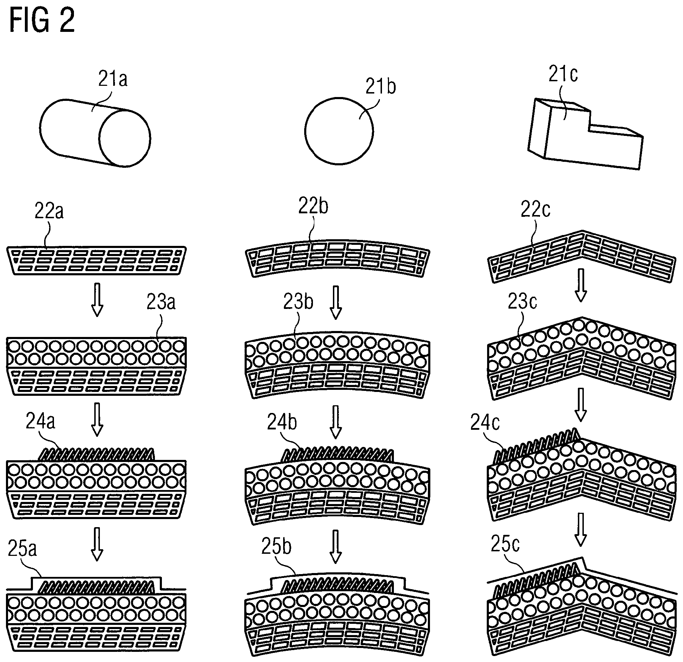

Fig. 2 shows optional postprocessing steps for three different geometries of the three-dimensional composite object. The left column of Fig. 2 shows a cylindrical composite object 21a and beneath this a schematic cross sectional view of the outer wall 22a of the composite object 21a obtained by rotation molding in the context of the present method. Accordingly, the outer wall 22a has a first polymer material and reinforcement fibers homogeneously embedded in it. On the outer wall 22a there is then placed a foam 23a and on top of this an inlay or decorative element 24a. Finally, the outer wall 22a is coated with a thin layer 25a.

The middle column of Fig. 2 shows a spherical composite object 21b and beneath this a schematic cross sectional view of the outer wall 22b of the composite object 21b obtained by rotation molding in the context of the present method. Accordingly, the outer wall 22b has a first polymer material and reinforcement fibers homogeneously embedded in it. On the outer wall 22b there is then placed a foam 23b and on top of this an inlay or decorative element 24b. Finally, the outer wall 22b is coated with a thin layer 25b.

The right column of Fig. 2 shows a composite object 21c with a complex geometry and beneath this a schematic cross sectional view of the outer wall 22c of the composite object 21c obtained by rotation molding in the context of the present method. Accordingly, the outer wall 22c has a first polymer material and reinforcement fibers homogeneously embedded in it. On the outer wall 22c there is then placed a foam 23c and on top of this an inlay or decorative element 24c. Finally, the outer wall 22c is coated with a thin layer 25c.

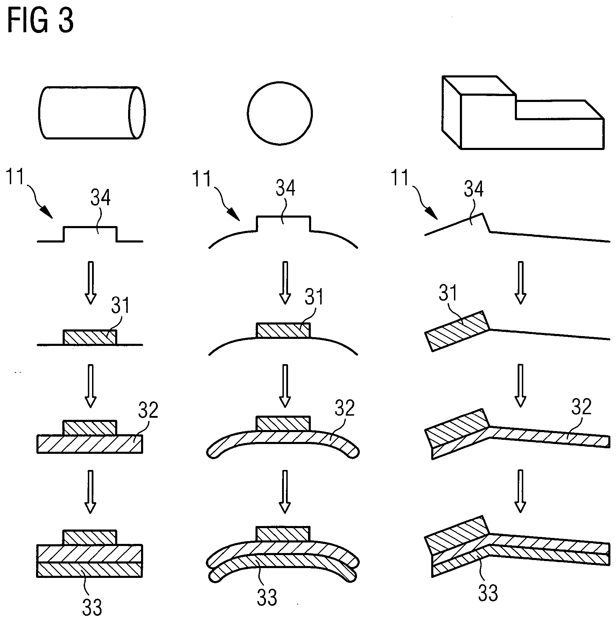

Fig. 3 shows sample methods for the manufacture of a multilayered composite article in the context of the present invention. Similar to Fig. 2, the left column of Fig. 3 shows the manufacturing of a cylindrical composite object, the middle column the manufacturing of a spherical composite object and the right column the manufacturing of a composite object with a complex geometry.

First of all, in a first group of method steps "A", a first layer 31 of the composite object is produced in a rotatable casting mold 11. When this first layer 31 is a composite layer, i.e., a layer which has a first polymer material and a second material (e.g., a fiber material), the group of method steps "A" involves the method steps (a.) to (g.) already explained in detail. If the first layer 31 is not a composite layer, the group of method steps "A" does not necessarily include all method steps (a.) to (g.). For example, in this case, the layer 31 might comprise only a single material and therefore the method step (c.) of filling in a second material could be omitted. Alternatively, it is also possible to insert the first layer 31 in recesses or depressions 34 of the mold 11. Thus, the layer 31 could be prefabricated from one or more materials outside the mold 11. Moreover, the first layer 31 could also be molded directly in the mentioned recesses and depressions 34, for example, by a suitable injection process.

The first layer 31 can also involve components, such as prefabricated components and/or intermediate products. For example, electronic elements or light-emitting elements can be inserted in the mentioned recesses or depressions 34 of the mold 11. Examples of such elements are light-emitting elements (LEDs, OLEDs etc.), sensors, chips or weights. Moreover, it is possible for such elements to fulfill purely decorative purposes.

Alternatively to the providing of recesses or depressions 34, the first layer 31 or the components forming the first layer could be otherwise held in the mold 11, for example, by means of magnetic attraction or by vacuum. Thus, instead of depressions 34, there could be vacuum boreholes provided in the mold 11, through which the first layer 31 can be sucked in.

It is also possible for the casting mold 11 to have elevations instead of the depressions 34 shown in Fig. 3. The elevations could be used to create grooves in the outer surface of the first layer 31.

Next, in a second group of method steps "B", a second layer 32 of the composite object is created in the rotatable casting mold 11. This layer 32 is deposited on the first layer 31 and enters into a connection with it. If this second layer 32 is a composite layer, i.e., a layer which comprises a first polymer material and a second material (e.g., a fiber material), the group of method steps "B" involves the method steps (a.) to (g.) already explained in detail. If the second layer 32 is not a composite layer, the group of method steps "B" does not necessarily include all method steps (a.) to (g.). For example, in this case, the layer 32 might comprise only a single material and therefore the method step (c.) of filling in a second material could be omitted.

Finally, in a third group of method steps "C", a third layer 33 of the composite object is created in the rotatable casting mold 11. This layer 33 is deposited on the second layer 32 and enters into a connection with it. If this third layer 33 is a composite layer, i.e., a layer which comprises a first polymer material and a second material (e.g., a fiber material), the group of method steps "C" involves the method steps (a.) to (g.) already explained in detail. If the third layer 33 is not a composite layer, the group of method steps "C" does not necessarily include all method steps (a.) to (g.). For example, in this case, the layer 33 might comprise only a single material and therefore the method step (c.) of filling in a second material could be omitted.

In any case, however, at least one of the three layers 31, 32 and 33 is a layer which is manufactured according to the method steps (a.) to (g.) already explained in detail. The number of layers in Fig. 3 is only an example. Instead of three layers, the composite object could also have two or more than three layers. In any case, at least one of these layers is a layer which is manufactured according to the method steps (a.) to (g.) already explained in detail. The method according to the invention allows various layers or coats to be produced homogeneously.

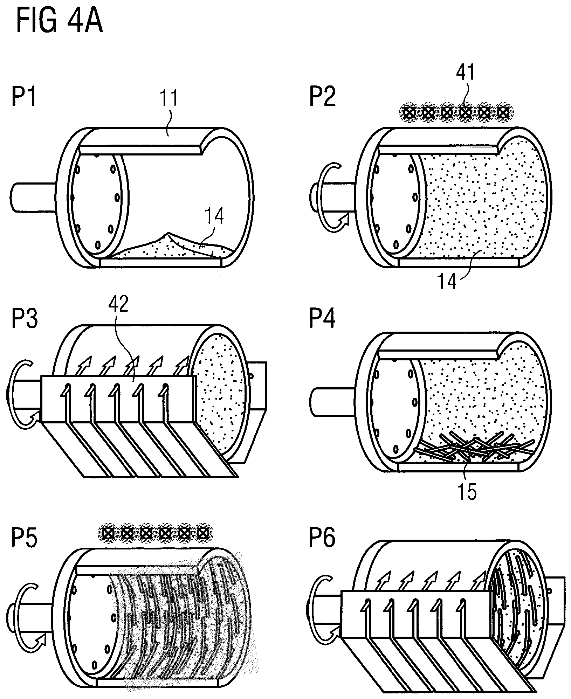

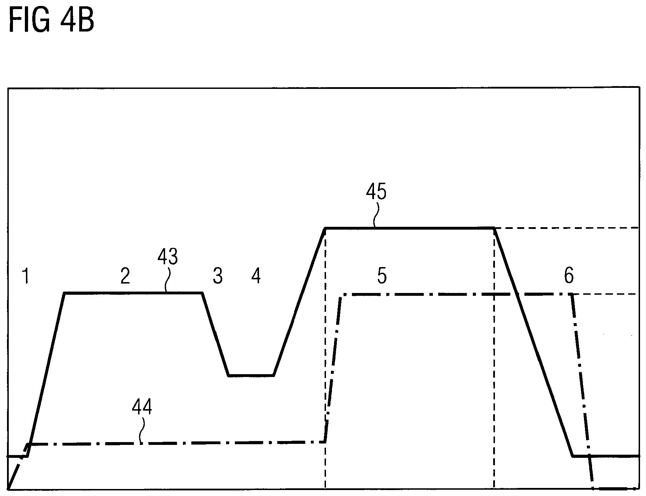

With the help of Figures 4A and 4B, another sample method according to the invention shall be explained below, especially in regard to the number of revolutions and the temperatures of the casting mold 11 that are used. Here, Fig. 4A shows a cylindrical casting mold 11 during the individual method steps and Fig. 4B the curve of the temperature 43 and number of revolutions 44 during the process. Instead of a cylindrical casting mold 11, any given shape of casting mold can be used, such as a spherical casting mold. As shown in Fig. 4A, in a first process step "P1" the casting mold 11 (also known as a die) is filled with a first thermoplastic material 14 (also known as a matrix). Next, in a process step "P2", the casting mold 11 and the first material 14 contained therein is heated to a first temperature, which is maintained during the process step "P3", as shown in Fig. 4B. The heating can be done, for example, by means of an infrared radiator 41. The casting mold 11 and the first material 14 contained therein are cooled down in a process step "P3", e.g., by means of a compressed air cooling 42. Next, in a process step "P4", the casting mold 11 is filled with the second material 15, which comprises fibers in the example of Fig. 4A.

The number of revolutions of the casting mold 11 at an approximately constant, relatively low level during the process steps "P1", "P2", "P3" and "P4", as shown in Fig. 4B.

In a process step "P5", the casting mold and the first material 14 and second material 15 contained therein are heated to a relatively high temperature, e.g., by means of the infrared radiator 41. After this temperature has been reached, the number of revolutions of the casting mold 11 is speeded up. The temperature is at a constant high level during a period of time called the holding time 45. In a last process step "P6", the casting mold 11 and the resulting composite object of a first material 14 and second material 15 are cooled down. After this, the number of revolutions of the casting mold 11 is reduced to zero and the composite object is stripped from the mold. The cooldown can occur, for example, by means of compressed air cooling 42.

In the following, especially advantageous combinations of number of revolutions and temperature in process step "P5" shall be indicated, which lead to easily workable composite articles: 30 rpm (revolutions of the casting mold 11 per minute) at 220-240° C, 100 rpm at 230-240° C, 200 rpm at 200-220° C and 300 rpm at 160-220° C.

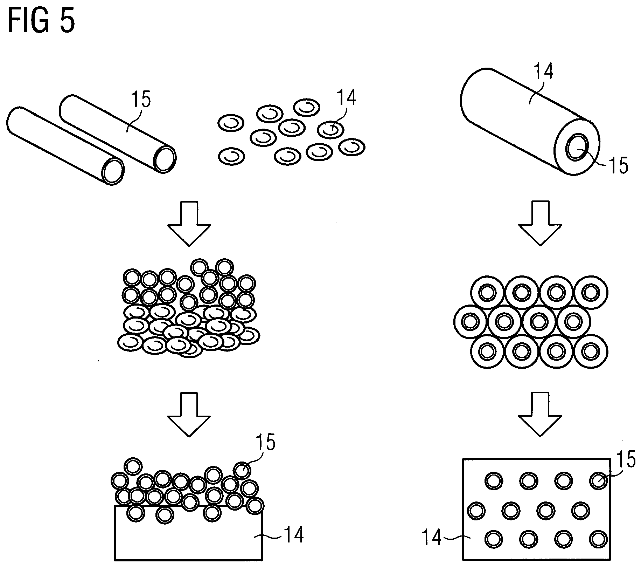

In the context of the method according to the invention, composite materials can also be used as starting materials for rotational molding in order to accomplish a homogeneous distribution of the second material 15 in the three-dimensional composite object. For example, it is possible to use fiber bundles or yarns, which are sheathed with a polymer material, such as a first thermoplastic material 14 (composite fibers). At the left half of Fig. 5 is shown schematically a conventional rotational molding process, in which neither composite fibers are used, nor is at least one process parameter adapted during the performance of the method so that a homogeneous distribution of the second material 15 in the resulting composite object is achieved. Accordingly, the polymer substrate or matrix material 14 and the fibers 15 separate from the mixture.

At the right half of Fig. 5 is shown schematically a method according to the present invention, in which composite fibers are additionally used. The fibers of the second material 15 are sheathed with the first polymer material 14. The three-dimensional composite object so obtained has an extremely homogeneous distribution of the fibers 15 within the first matrix material 14.

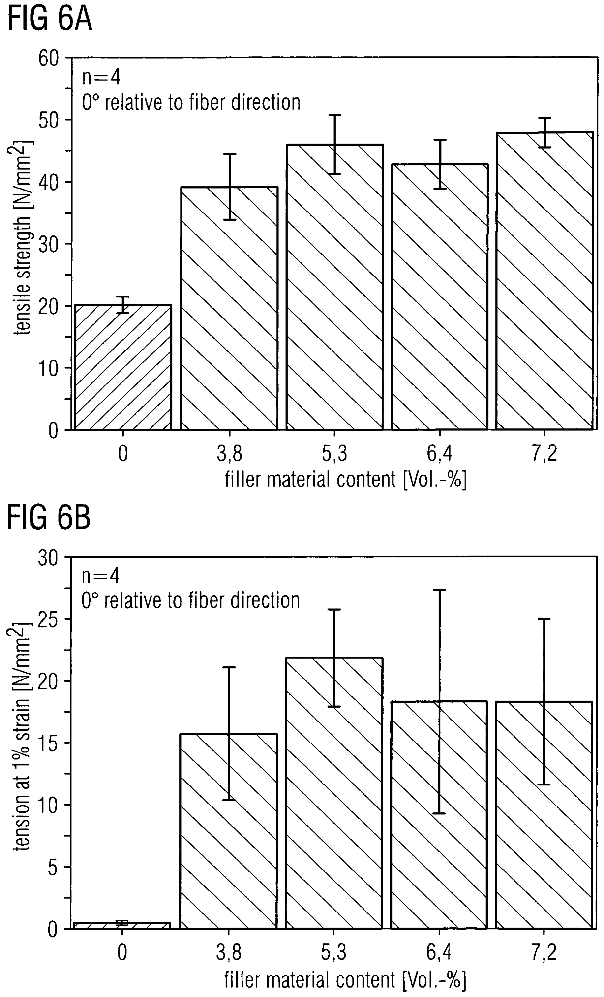

Figures 6A and 6B show the results of measurements which were taken on a rotational molded TPU specimen with sheathed fibers. A total of four trials were carried out for each measurement position. The fibers are aramide fibers, which were sheathed with TPU. Fig. 6A shows the influence of the filler content of the fibers on the tensile strength of the specimen. The tensile strength here was measured at an angle of 0° to the aramide fibers embedded in the specimen.

An unreinforced specimen (filler content 0%) has a tensile strength of 20 N/mm². Already with a filler content of aramide fiber of 3.8% the tensile strength rises to just under 40 N/mm², i.e., nearly double.

The diagram of Fig. 6B shows the influence of the filler content of fibers on the stress needed to produce a 1% elongation of the specimen. The stress was applied to the specimen at an angle of 0° to the aramide fibers embedded in the specimen. Without aramide fibers (filler content 0%) a stress of only around 1 N/mm² is needed to stretch the specimen by 1%. Already at 3.8% filler content of aramide fibers, the necessary stress rises to a good 15 N/mm². A further improvement to over 20 N/mm² is achieved with a filler content of 5.3%.

The casting mold 11 used in the context of the present invention can have at least one sensor, which detects at least one process parameter during the performance of the method according to the invention. The process parameter can be the temperature, the rotation speed of the casting mold, an acceleration acting on the casting mold and/or on the material filled into the casting mold, the thickness of at least one material layer, or the distribution of the first and/or second material. The data detected by the sensor can be evaluated during the performance of the method in order to adapt at least one process parameter. For this, the sensor can send the detected data in real time, e.g., wirelessly (via Bluetooth, WLAN, etc.) to a computer, which evaluates the data and possibly arranges for a corresponding adaptation of a process parameter. The sensor can be a temperature sensor, a revolution counter, an acceleration sensor, an optical sensor or an acoustical sensor.

The casting mold 11 used in the context of the present invention can have a patterned surface with depressions and/or elevations on its inside. In this way, the outer surface of the composite object being manufactured by means of the method according to the invention can be provided with a structure. For example, the surface of the casting mold 11 could be configured by means of elevations in the form of webs, for example, so that the outer surface of the composite object has grooves. Such grooves are used, for example, in soccer balls in order to improve the aerodynamic properties. Another example is the "dimples" found in golf balls, which can likewise be produced by means of a casting mold 11 with patterned surface.

Possible three-dimensional composite articles which can be obtained by means of the method according to the invention are sports balls or bladders or combinations of bladders and casings (composite bladders) for sports balls. For example, an additional casing can be omitted from a composite bladder if reinforcement fibers 15 are homogeneously distributed directly in the polymer substrate material 14 by means of the method according to the invention. The composite bladder then has the necessary stability and tear strength without an additional casing. In this way, a whole series of manufacturing steps is omitted for the separate casing. In addition, the material consumption is minimized and no adhesive is needed for fixation of the casing to the bladder. The ball so obtained with the composite bladder is largely isotropic.

Further three-dimensional composite articles which can be manufactured by means of the method according to the invention are shin guards. These can be produced with a cylindrical mold. In an optional postprocessing step, the resulting composite object can be cut into two halves in order to obtain two shin guards.

Finally, shoes or parts of shoes can also be made by the method according to the invention. One benefit of the manufacture of shoes by means of the described method is that the manufacturing is possible entirely without lasts. A last-free shoe production according to the method of the invention is more flexible as well as time and cost saving.

### List of reference symbols

- 11: Casting mold
- 12: Vertical rotation axis
- 13: Horizontal rotation axis
- 14: First material
- 15: Second material
- 21a, 21b, 21c: Three-dimensional composite body
- 22a, 22b, 22c: Wall of a three-dimensional composite body
- 23a, 23b, 23c: Foam
- 24a, 24b, 24c: Inlay or decorative element
- 25a, 25b, 25c: Thin layer
- 31: First layer
- 32: Second layer
- 33: Third layer
- 34: Depression
- 41: Infrared radiator
- 42: Compressed air cooling
- 43: Temperature curve
- 44: Curve of the number of revolutions
- 45: Holding time

## Claims

1. Method for manufacturing a three-dimensional composite object (21a, 21b, 21c), especially a sports article, comprising the steps:
a. providing a rotatable casting mold (11);
b. filling of a first material (14) into the casting mold (11);
c. filling of a second material (15) into the casting mold (11), wherein at least one of the materials (14, 15) is a polymer material;
d. placing at least one element in the casting mold (11), wherein the element (11) is a multilayered panel, an electronic component, a film, a textile, or a stiffening element;
e. moving of the casting mold (11);
f. heating and/or a cooling of at least one of the filled materials (14, 15); and
g. adapting of at least one process parameter during the performance of one or more of the preceding steps, so that a homogeneous distribution of the second material (15) in the manufactured composite object (21a, 21b, 21c) is achieved, wherein the at least one process parameter is the rotation speed of the casting mold, the speed with which the casting mold is moved, the deflection of the casting mold in the case of a swivel movement, the heating time of at least one of the materials, the cooling time of at least one of the materials, the viscosity of at least one of the materials, the angle of the rotation axes of the casting mold, the ratio of the rotation speeds about the rotation axes of the casting mold, the holding times of the first and/or second material in the casting mold, the filling times of the first and/or second material, or combinations thereof.

2. Method according to the preceding claim, wherein
the at least one process parameter is the rotation speed of the casting mold and 30 the rotation speed is chosen in accordance with at least one of the materials, or wherein
the at least one process parameter is the speed with which the casting mold is moved and this speed is chosen in accordance with at least one of the materials, or wherein
the at least one process parameter is deflection of the casting mold in the case of a swivel movement and this deflection is chosen in accordance with at least one of the materials, or wherein
the at least one process parameter is the heating time of at least one of the materials and the heating time is less than the heating times typically used in rotation casting, or wherein
the at least one process parameter is the time until solidification of at least one of the materials and the time until solidification is less than the times until solidification typically used in rotation casting, or wherein
the at least one process parameter is the angle of the rotation axes of the casting mold, the casting mold has two rotation axes, and these are essentially perpendicular to each other, or wherein
the at least one process parameter is the filling time of the second material and the filling time of the second material comes before the softening of the first material.

3. Method according to one of the preceding claims, wherein the second material comprises fibers.

4. Method according to one of the preceding claims, wherein the at least one process parameter is the length of the fibers.

5. Method according to one of claims 3 to 4, wherein the fibers are aramide fibers, polymer fibers and/or natural fibers.

6. Method according to one of claims 3 to 5, wherein the fibers are coated with the first material.

7. Method according to one of the preceding claims, wherein the first and/or second material is a reactive material, a thermoplastic material, especially a polyurethane, TPU, or a duroplastic material.

8. Method according to one of the preceding claims, wherein the first material is 30 provided in liquid and/or granular form.

9. Method according to one of the preceding claims, wherein the rotatable casting mold can turn about at least two axes, or about three axes.

10. Method according to one of the preceding claims, wherein method steps b. to d. are carried out at least twice, without removing the material from the casting mold in between, so as to obtain a multilayered composite object.

## Patentansprüche

1. Verfahren zur Herstellung eines dreidimensionalen Verbundgegenstandes (21a, 21b, 21c), insbesondere eines Sportartikels, mit den Schritten:
a. Bereitstellen einer drehbaren Gießform (11);
b. Einfüllen eines ersten Materials (14) in die Gießform (11);
c. Einfüllen eines zweiten Materials (15) in die Gießform (11), wobei mindestens eines der Materialien (14, 15) ein Polymermaterial ist;
d. Anordnen mindestens eines Elements in der Gießform (11), *wobei das Element (11) eine mehrschichtige Platte, eine elektronische Komponente, eine Folie, ein Textil oder ein Versteifungselement ist;*
e. Bewegen der Gießform (11);
f. Erwärmen und/oder Abkühlen mindestens eines der eingefüllten Materialien (14, 15); und
g. Anpassen mindestens eines Prozessparameters während der Durchführung eines oder mehrerer der vorhergehenden Schritte, so dass eine homogene Verteilung des zweiten Materials (15) in dem hergestellten Verbundgegenstand (21a, 21b, 21c) erreicht wird, wobei der mindestens eine Prozessparameter die Drehzahl der Gießform, die Geschwindigkeit, mit der die Gießform bewegt wird, die Auslenkung der Gießform bei einer Schwenkbewegung, die Erwärmungszeit mindestens eines der Materialien, die Abkühlzeit mindestens eines der Materialien, die Viskosität mindestens *eines der* Materialien, der Winkel der Drehachsen der Gießform, das Verhältnis der Drehzahlen um die Drehachsen der Gießform, die Haltezeiten des ersten und/oder zweiten Materials in der Gießform, die Füllzeiten des ersten und/oder zweiten Materials oder Kombinationen davon ist.

2. Verfahren nach dem vorhergehenden Anspruch, wobei
der mindestens eine Prozessparameter die Drehzahl der Gießform ist und die Drehzahl gemäß mindestens einem der Materialien gewählt wird, oder wobei
der mindestens eine Prozessparameter die Geschwindigkeit ist, mit der die Gießform bewegt wird und diese Geschwindigkeit gemäß mindestens einem der Materialien gewählt wird, oder wobei
der mindestens eine Prozessparameter die Auslenkung der Gießform bei einer Schwenkbewegung ist und diese Auslenkung gemäß mindestens einem der Materialien gewählt wird, oder wobei
der mindestens eine Prozessparameter die Erwärmungszeit mindestens eines der Materialien ist und die Erwärmungszeit kleiner ist als die typischerweise beim Rotationsgießen verwendeten Erwärmungszeiten, oder wobei
der mindestens eine Prozessparameter die Zeit bis zum Erstarren mindestens eines der Materialien ist und die Zeit bis zum Erstarren kleiner ist als die typischerweise beim Rotationsgießen verwendeten Zeiten bis zum Erstarren, oder wobei
der mindestens eine Prozessparameter der Winkel der Drehachsen der Gießform ist, die Gießform zwei Drehachsen aufweist und diese im Wesentlichen senkrecht zueinander stehen, oder wobei
der mindestens eine Prozessparameter die Einfüllzeit des zweiten Materials ist und die Einfüllzeit des zweiten Materials vor dem Erweichen des ersten Materials liegt.

3. Verfahren nach einem der vorhergehenden Ansprüche, wobei das zweite Material Fasern umfasst.

4. Verfahren nach einem der vorhergehenden Ansprüche, wobei der mindestens eine Prozessparameter die Länge der Fasern ist.

5. Verfahren nach einem der Ansprüche 3 bis 4, wobei die Fasern Aramidfasern, Polymerfasern und/oder Naturfasern sind.

6. Verfahren nach einem der Ansprüche 3 bis 5, wobei die Fasern mit dem ersten Material beschichtet sind.

7. Verfahren nach einem der vorhergehenden Ansprüche, wobei das erste und/oder zweite Material ein reaktives Material, ein thermoplastisches Material, insbesondere ein Polyurethan, TPU, oder ein duroplastisches Material ist.

8. Verfahren nach einem der vorhergehenden Ansprüche, wobei das erste Material in flüssiger und/oder granularer Form bereitgestellt wird.

9. Verfahren nach einem der vorhergehenden Ansprüche, wobei sich die drehbare Gießform um mindestens zwei Achsen oder um drei Achsen drehen kann.

10. Verfahren nach einem der vorhergehenden Ansprüche, wobei die Verfahrensschritte b. bis d. mindestens zweimal durchgeführt werden, ohne das Material aus der Gießform dazwischen zu entfernen, um einen mehrschichtigen Verbundgegenstand zu erhalten.

## Revendications

1. Procédé de fabrication d'un objet composite tridimensionnel (21a, 21b, 21c), en particulier d'un article de sport, comprenant les étapes suivantes :
a. obtention d'un moule de coulée rotatif (11) ;
b. remplissage d'une première matière (14) dans le moule de coulée (11) ;
c. remplissage d'une seconde matière (15) dans le moule de coulée (11), au moins l'une des matières (14, 15) étant un matériau polymère ;
d. placement d'au moins un élément dans le moule de coulée (11), l'élément (11) étant un panneau multicouche, un composant électronique, un film, un textile, ou un élément raidisseur ;
e. mise en mouvement du moule de coulée (11) ;
f. chauffage et/ou refroidissement d'au moins l'une des matières remplies (14, 15) ; et
g. adaptation d'au moins un paramètre de processus pendant l'exécution d'une ou plusieurs des étapes précédentes, de manière à obtenir une distribution homogène de la seconde matière (15) dans l'objet composite fabriqué (21a, 21b, 21c), l'au moins un paramètre de processus étant la vitesse de rotation du moule de coulée, la vitesse à laquelle est mis en mouvement le moule de coulée, l'excursion du moule de coulée dans le cas d'un mouvement oscillant, le temps de chauffage d'au moins l'une des matières, le temps de refroidissement d'au moins l'une des matières, la viscosité d'au moins l'une des matières, l'angle des axes de rotation du moule de coulée, le rapport des vitesses de rotation autour des axes de rotation du moule de coulée, les temps de maintien de la première et/ou de la seconde matière dans le moule de coulée, les temps de remplissage de la première et/ou de la seconde matière, ou des combinaisons des précédents.

2. Procédé selon la revendication précédente, dans lequel
l'au moins un paramètre de processus est la vitesse de rotation du moule de coulée, et la vitesse de rotation est choisie en fonction de l'une des matières, ou dans lequel l'au moins un paramètre de processus est la vitesse à laquelle le moule de coulée est mis en mouvement et cette vitesse est choisie en fonction d'au moins l'une des matières, ou dans lequel
l'au moins un paramètre est l'excursion du moule de coulée dans le cas d'un mouvement oscillant, et cette excursion est choisie en fonction d'au moins l'une des matières, ou dans lequel
l'au moins un paramètre de processus est le temps de chauffage d'au moins l'une des matières, et le temps de chauffage est inférieur aux temps de chauffage typiquement utilisés pour une coulée en rotation, ou dans lequel
l'au moins un paramètre de processus est le temps jusqu'à la solidification d'au moins l'une des matières, et le temps jusqu'à la solidification est inférieur aux temps jusqu'à solidification typiquement utilisés en coulée en rotation, ou dans lequel l'au moins un paramètre de processus est l'angle des axes de rotation du moule de coulée, le moule de coulée possédant deux axes de rotation et ceux-ci étant essentiellement perpendiculaires l'un à l'autre, ou dans lequel
l'au moins un paramètre de processus est le temps de remplissage de la seconde matière, et le temps de remplissage de la seconde matière vient avant le ramollissement de la première matière.

3. Procédé selon l'une des revendications précédentes, dans lequel la seconde matière comprend des fibres.

4. Procédé selon l'une des revendications précédentes, dans lequel l'au moins un paramètre de processus est la longueur des fibres.

5. Procédé selon l'une des revendications 3 à 4, dans lequel les fibres sont des fibres aramides, des fibres polymères et/ou des fibres naturelles.

6. Procédé selon l'une des revendications 3 à 5, dans lequel les fibres sont revêtues par la première matière.

7. Procédé selon l'une des revendications précédentes, dans lequel la première et/ou la seconde matière est une matière réactive, une matière thermoplastique, en particulier un polyuréthanne, TPU, ou une matière thermodurcissable.

8. Procédé selon l'une des revendications précédentes, dans lequel la première matière est obtenue sous forme liquide et/ou granulaire.

9. Procédé selon l'une des revendica- tions précédentes, dans lequel le moule de coulée tournant peut tourner autour d'au moins deux axes, ou autour de trois axes.

10. Procédé selon l'une des revendications précédentes, dans lequel les étapes de procédé b. à d. sont exécutées au moins deux fois, sans retirer la matière du moule de coulée dans l'intervalle, de manière à obtenir un objet composite multicouche.
